# EUROPEAN PATENT SPECIFICATION

(11) **EP 4 068 718 B1**
(45) Date of publication and mention of the grant of the patent: **01.04.2026**
(21) Application number: 21165717.6
(22) Date of filing: 29.03.2021
(51) Int. Cl.: H04L 65/80

(54) **PREDICTIVE STREAMING ADAPTATION OVER A NETWORK**
PRÄDIKTIVE STREAMING-ANPASSUNG ÜBER EIN NETZWERK
ADAPTATION PRÉDICTIVE DE DIFFUSION EN CONTINU SUR UN RÉSEAU

(43) Date of publication of application: 05.10.2022
(73) Proprietor: Unify Beteiligungsverwaltung GmbH & Co. KG, 81739 München (DE)
(72) Inventor: FRANIC, Krunoslav, 35253 Brodski Stupnik (HR); TORNIJ, Werner, 5507 KW Veldhoven (NL); KALLIGERIS, Myronas, 14671 N. Erythraia, Attica (GR); BERGANTIN, Rogerio, 06030-016 Osasco (BR); IOSIFIDIS, Dimitrios, 15238 Chalandri, Attica (GR)
(74) Representative: Schaafhausen, Anne

(56) References cited:
- WO-A1-2016/123497
- US-A1- 2019 037 002

## Description

### TECHNICAL FIELD

The present disclosure generally relates to systems and methods for predicting network service for a moving device in the network. In particular, the systems and methods relate to providing one or more predictive network parameters to mitigate potential network disruptions to a device on the network.

### BACKGROUND

Unexpected and unpredictable interference patterns can occur in nearly all existing wireless networks, including the most advanced commercially available networks (for example, Long Term Evolution "LTE", fourth generation "4G", fifth generation "5G"). While unforeseen circumstances cannot be forecast, predictable issues also lead to disruptions in stream quality on a regular basis. These problems affect the end-user experience, which in turn presents difficulties for organizations who rely on the mobile network. As an example, video broadcasting services attempt to deliver immersive video experiences to spectators through the use of moving mobile cameras connected. This can be done over LTE networks to present live actions scenes (e.g., racing, sailing, and other sports). Regular disruptions in stream quality from remote, moving mobile cameras connected over an LTE network are expected, but should be handled. Broadcasters can switch to another source, but when the disruption has already been shown to the end consumers, the result is a lower quality stream (e.g., artefacts, interruptions, etc.) and a degraded user experience.

Even in locations with generally adequate coverage, disruptions can occur anywhere in the deployed mobile network. This phenomenon is aggravated during coverage of big events due to overall network usage and strains on delivery capacity. Huge infrastructure is built and investments in equipment are made by host broadcasters responsible for streaming all the events for billions of spectators around the world by way of scores of licensed television broadcasters. In a specific example of an Olympic sailing broadcast, each boat may have one or more cameras available to provide an immersive experience by capturing action as seen from the vantage point of the competitors (or even better viewpoints from unique locations, such as the hull of boats). When a competitor's boat enters an area where there was low or no network coverage, the immersive experience vanishes.

Broadly speaking, public LTE, 4G or 5G networks are the current primary option for customers seeking capacity, bandwidth, speed, security, reliability and quality of service. Although those are also the main features offered by private LTE technology, unexpected issues are inevitable. Imperfect service is exacerbated if attempting to serve a device in movement. Therefore, it is a technical challenge to find ways to identify exceptions in reliable environments. The prior art document WO2016/123497 A1 shows predicting future locations for a mobile device based on the current location, statistical data, speed, orientation, time of day, etc., and then, estimating the corresponding bandwidth values at the future locations are estimated. The prior art document US2019/037002 A1 presents predicting a network gateway metrics of performance via Machine Learning including historical gateway metrics.

The present invention is based on the object to provide a method and a system that allow administrators or users of the network to avoid potential disruptions prior to the time service is degraded or disrupted entirely.

The object is solved by a method having the features according to claim1 and a system having the features according to claim 11. Preferred embodiments of the invention are defined in the respective dependent claims.

The present invention relates to a method for predicting network service of a private network serving a moving device in the private network includes receiving, by a data interface, core network information, device information in the private network, and environmental data. The method includes the data interface parsing the core network information, the device information and the environment data into one or more data streams. A raw location data stream from among the data streams is transmitted by the data interface to a location calculator. The method further includes calculating, by the location calculator, a calculated location data stream based, at least in part, on the raw location data stream and static network data. A predictive information data stream from among the data streams is transmitted by the data interface to a prediction component. The location calculator transmits the calculated location data stream to the prediction component. The method further includes the prediction component determining a predicted network performance metric related to the device moving through the private network. The predicted network performance metric is determined based, at least in part, on the predictive information data stream and the calculated location data stream.

According to a preferred embodiment, one or more machine learning algorithms are performed on at least portions of the predictive information data stream and the calculated location stream to determine the predicted network performance metric.

According to another preferred embodiment, performing the one or more machine learning algorithms includes estimating network performance for the device at a location in the private network.

According to another preferred embodiment, performing one or more machine learning algorithms includes performing an ensemble machine learning method.

According to a preferred embodiment, the method further includes iteratively performing the steps in order to continue providing mitigation as users and devices continue in motion. In other words, the steps of receiving, parsing, transmitting the raw location data stream, calculating, transmitting the predictive information data stream, transmitting the calculated location data stream, and determining the predicted network performance metric are repeated as needed. Subsequent to those iterations, a prediction data stream including a plurality of predicted network performance metrics is transmitted from the prediction component to a prediction refinement component according to an embodiment.

According to a preferred embodiment, one or more machine learning algorithms of the prediction component are refined through online training of the one or more machine learning algorithms.

According to a preferred embodiment, the method further includes transmitting the predicted network performance metric from the prediction component to a web application server.

According to a preferred embodiment, the web application server transmits the predicted network performance metric to a user interface component in response to the predicted network performance metric falling below a specified performance threshold.

According to a preferred embodiment, the web application server transmits the predicted network performance metric to a user interface component in response to a request received from the user interface component.

According to a preferred embodiment, determining the predicted network performance metric includes estimating network performance for a time offset.

According to a preferred embodiment, the predicted network performance metric is determined using static data, where the static data includes one or more of terrain data, location topography data, antenna location(s), or antenna transmission power data from a map of radio frequency (RF) characteristics of the private network.

According to a preferred embodiment, the calculated location data stream is calculated based on static network data, which includes configuration data transmitted from a configuration server.

According to a preferred embodiment, environmental data includes weather data.

According to a preferred embodiment, device information includes raw device location data, device signal strength data and/or device speed data.

The present invention also relates to a system for predicting network performance of a private network serving a device moving through the private network includes a data interface, a location calculator, and a prediction component. The data interface is configured to receive core network information, device information in the private network, and environmental data. The data interface is also configured to parse the core network information, the device information, and the environmental data into one or more data streams. The location calculator is configured to receive, from the data interface, a raw location data stream among the one or more data streams. The location calculator is further configured to determine calculated location information based, at least in part, on static network data and the raw location data stream received, as well as to transmit a calculated location data stream. The prediction component is configured to receive, from the data interface, at least a predictive information data stream among the one or more data streams and to receive, from the location calculator, the calculated location data stream. The prediction component is configured to determine one or more network performance metrics from the predictive information data stream and the calculated location data stream.

According to a preferred embodiment, the system further includes a web application server configured to receive the one or more network performance metrics and transmit the one or more network performance metrics to a user interface component.

According to a preferred embodiment, the system includes a configuration server configured to transmit network configuration information through one or more administrative application programming interfaces (APIs) and a user interface (UI).

According to a preferred embodiment, a data repository is configured to receive and store the one or more network performance metrics, the network configuration information, and the static network data. The static network data includes one or more of terrain data, location topography data, or radio frequency (RF) characteristics of the private network in some embodiments.

Other aspects and advantages of the disclosure will become apparent from the following detailed description, taken in conjunction with the accompanying drawings, which illustrate by way of example the teachings of the disclosure, and are not restrictive.

### BRIEF DESCRIPTION OF THE DRAWINGS

A better understanding of embodiments of the present disclosure (including alternatives and/or variations thereof) may be obtained with reference to the detailed description of the embodiments along with the following drawings, in which:
FIG. 1 depicts an embodiment of an environment for predicting network service of a device moving through a network, according to embodiments of the disclosure;
FIG. 2 depicts a system for predicting network service of a device moving through the network, according to embodiments of the disclosure;
FIG. 3 is a diagram representing data flow through a system for predicting network service of a device moving through the network, according to embodiments of the disclosure;
FIG. 4 is a flow chart representing a method of predicting network service of a device moving through the network, according to embodiments of the disclosure; and
FIG. 5 is a visual representation (VR) that illustrates features and aspects of one or more application programming interfaces (APIs) according to embodiments of the disclosure.

### DETAILED DESCRIPTION

To solve the above and other technical problems, various embodiments of the present application receive or retrieve data from multiple data sources, e.g., a network infrastructure, mobile devices, etc., in order to process, analyze and organize that data. Once gathered, that data is transformed into predictions that can be delivered as output via an interface according to some embodiments. The combination of sources creates access to data that would not otherwise be available and allows options for implementing responsive systems and services with advanced available features.

Within the context of the above challenges, one technical question of this disclosure centers on data analysis processes. To overcome these and other problems, analysis addresses the identification of data patterns that can determine whether a specific location is capable of delivering adequate network service. Based on those data patterns, a prediction data model may be built that provides accurate predictions.

Further compounding the technical challenges, there is no standard interface available in the market or common approach applied by mobile network providers, by vendors, or by network operators to explore performance data from the network equipment or to generate the desired predictive insights. When considering public mobile telecommunications networks, it should also be noted that access to network operations is highly restricted, while the exchange of data among operators and third parties is extremely limited. Sometimes that exchange of data is strictly prohibited.

An outcome of the disclosed prediction service is to provide a prediction of a network performance metric (for example, the bandwidth) for one or more registered mobile devices, at a calculated or provided location within a short time offset. In order to achieve this, a prediction component is bundled within a system of the solution. The prediction component includes one or more pretrained ML algorithms, which are able to process pieces of data from various datasets. The pieces of data are predicated on network configuration or conditions that may affect the network performance metric at a specific location.

According to embodiments of the disclosure, control elements of streaming control applications are interconnected with one or more network hardware devices to collect device information of the mobile device as well as network information. The described solutions capture network performance data to extrapolate trends and network behavior. Various embodiments transform those trends to predict the future network service availability of the mobile devices moving through the network. These solutions give broadcast operators accurate, real-time insights, which help drive effective decisioning for streaming sources.

Further applying the disclosed solutions to the background problem outlined above, in some implementations a broadcaster may have several devices with streaming capabilities moving through a network at a high speed. The devices could be cameras, microphones, or other devices (e.g., smart phones, tablets, laptop computers, personal computers (PCs), etc.) capable of streaming audio and/or visual information. Other examples could be various instruments for conducting measurements useful in streaming for a broadcast, such as speedometers, temperature gauges, wind gauges, tachometers, humidity sensors, or other instruments used individually or in conjunction with competitions or events to be streamed. For instance, part of a streaming broadcast could include video from a mounted camera, along with instrumentation from a racing vehicle, such as speed and engine revolutions per minute (RPM) as the vehicle moves through a racecourse. In the example of a race, each vehicle may be outfitted with the camera and speedometer instrumentation, such that a number of devices are moving through the network.

Using location information and other data of each device, a predictive component can predict possible locations for each device at a time offset, for example, about three seconds from the current time. Checking against bandwidth, topography, weather conditions, radio conditions, core network conditions, and other devices likely to move into the possible locations, the predictive component can determine if adequate network resources will be available for each device. For a device (or devices) possibly moving into an area without network coverage in that time offset, the prediction service using the predictive component can recommend switching streaming devices to an alternate device prior to any disruption. This recommendation can be either "pushed" (i.e., automatically sent based on a condition or based on a regular period of time), "pulled" (i.e., automatically polled or provided as part of a subscription service) or requested specifically at a certain point by the user/administrator as a one-off request. For example, a warning can be issued for each car as it enters into an area of low bandwidth availability. Thus, the broadcaster can maintain a continuous stream of a high-quality feed.

Prior to discussing specific embodiments of the present solution, it may be helpful to describe aspects of the operating environment as well as associated system components in connection with the methods and systems described herein. It should be noted that the terms "data" and "information" can be used interchangeably throughout the following descriptions.

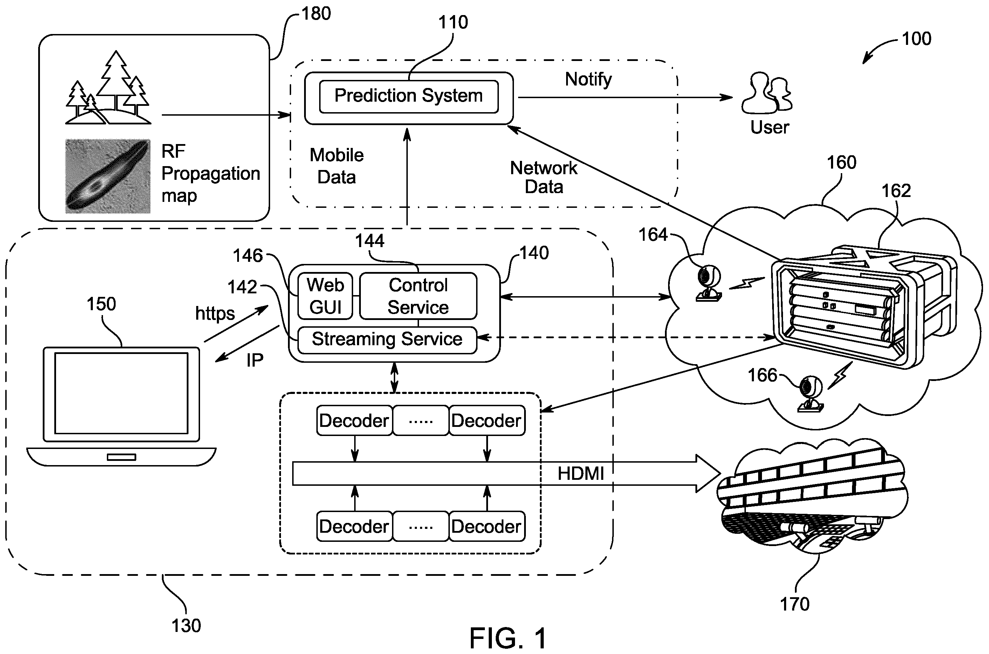

Referring to FIG. 1, an environment 100 for predicting network service for a device moving through the network is depicted according to embodiments of the disclosure. As an overview, environment 100 includes a prediction system 110, a private streaming network 130, an LTE network 160, broadcast control center 170, and static network data 180. Prediction system 110 is in communication with private streaming network 130. Private streaming network 130, which controls a broadcast stream transmitted to broadcast control center 170, is also in (two-way) communication with LTE network 160.

Private streaming network 130 includes a streaming control application 140 and a user device 150. Streaming control application 140 combines with a node hardware element 162 to provide the functionality for transmitting the broadcast stream to broadcast control center 170. Streaming control application 140 includes a streaming server 142, a control server 144, and a graphical user interface (GUI) 146. For example, streaming control application 140, through streaming server 142, can produce a broadcast stream in a suitable multimedia streaming standard, such as High Efficiency Video Coding (HEVC, also referred to as "H.265"), to transmit to broadcast control center 170. This is merely an example and streaming server 142 may be configured to serve the broadcast stream in a different protocol or format.

Control server 144 communicates with LTE network 160 to manage interactions between private streaming network 130 and LTE network 160. GUI 146 (shown as communicating with a user device 150 in FIG. 1) allows user device 150 to configure or alter network connections of moving network devices 164 and 166 or monitor network parameters within private streaming network 130. Streaming control application 140 can communicate with user device 150 via GUI 146 using standard internet protocols, such as a secure hypertext transfer secure (https) web domain.

Moving network devices 164 and 166, shown as mountable cameras, can be in contact with private streaming network 130 through node hardware element 162. While moving network devices 164 and 166 are shown as cameras, they are not so limited. In embodiments, moving network devices 164 and 166 may be microphones, measurement devices, or portable computing devices among other implementations. Also, while shown as two devices, the system is not so limited and more devices can be served by the network.

Node hardware element 162 can be a single piece of hardware or a package of devices capable of supporting radio frequency (RF) communications within LTE network 160. Node hardware element 162 can also provide the ability to connect to a core network. Node hardware element 162 can provide all of the capability of a fully functioning radio network, such as an LTE network (or alternatively a 4G or 5G network), or can act as an eNodeB device in a larger network. In some embodiments, node hardware element 162 is a "micro node", having a rack and/or portable case for ease of deployment. As examples, node hardware element 162 can be an apparatus such as an AIR-LYNX ALM17000 or an AIR-LYNX ALB11000 available from Atos of Bezons, France, among available options.

Prediction system 110 receives several types of data. In addition to static network data 180 mentioned above, prediction system 110 also receives core network information, device information of the mobile device and environmental data. In an embodiment, static network data 180 can include information such as a static RF propagation map built by radio propagation experts, based on the topology and various operational parameters (antennas, transmission power, and other related factors) of a network. Static network data 180 may be a sub-component of prediction system 110 or may be stored in a separate data repository or memory.

In some embodiments, prediction system 110 receives the core network information, as well as the device information from private streaming network 130. In some embodiments, prediction system 110 receives the core network information or the device information from another source, such as directly from LTE network 160. Inputs such as network capacity within private streaming network 130 or weather conditions at the location(s) of private streaming network 130 can be supplied from a variety of sources, for example from private streaming network 130, LTE network 160, various data repositories, or from internet sources.

Because prediction system 110 provides a data-driven decisioning output, the quality of input data affects the relevancy of the decisioning. In order to address the issue of data quality, a number of technical safeguards can be put in place to ensure prediction are accurately decisioned. Bundling private network service offerings (i.e., hardware and software) can be one way to ensure that relevant input data related to the core network and mobile data can be collected and trusted. Depending on the needs of prediction system 110, input streams can also be enhanced to include more data when hardware and software components of the private network (such as private streaming network 130) are closely bound through a common provider.

In some embodiments, prediction system 110 can be an add-on service within private network solutions (for example, private streaming network 130). Prediction system 110 and/or various sub-components described in further detail below can be designed to scale up or down based on the given load and the requirement for near real time predictions. In some embodiments, the various components are microservices. System design may factor in that the number of mobile devices can vary depending on the overall deployment or that some devices may become online/offline randomly or based on a schedule.

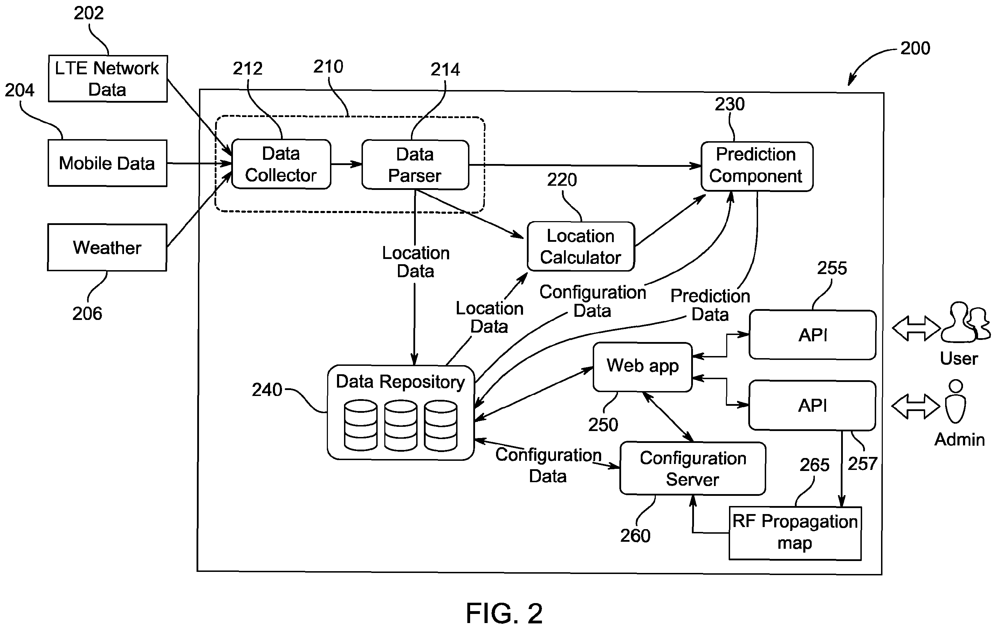

Turning now to FIG. 2, a prediction system 200 for predicting network service for a device moving through the network is depicted according to embodiments of the disclosure. In some embodiments, prediction system 200 can be similar or substantially similar to prediction system 110 described in environment 100 above. Prediction system 200 includes a data interface 210, a location calculator 220, a prediction component 230, a data repository 240, a web application server 250, and a configuration server 260. While more specificity will be given below to each of the various components listed above, one of skill in the relevant art will appreciate that any of the given interfaces, components, or servers can be implemented on a single device or on multiple devices. The described components can be implemented either in a localized or distributed fashion, or in some combination of localized and distributed fashion.

Data interface 210 includes a data collector 212 and a data parser 214. Data collector 212 retrieves data from, or receives inputs from, a network data source 202, a device data source 204, and an environmental data source 206. In various embodiments, device data source 204 may be the device for which the data is being retrieved or received. In some embodiments, network data source 202, device data source 204, and/or environmental data source 206 may be part of a common source, such as private streaming network 130 or LTE network 160 shown in FIG. 1 and described above. In some embodiments, a number of data sources make up data sources 202, 204, and 206.

In embodiments, data collector 212 can poll network data source 202, device data source 204 and environmental data source 206 at regular configurable intervals for the core network information, the device information and the environment data, respectively. The configurable intervals may be the same for all data sources or different configurable intervals may be used for different data sources. In other embodiments, data collector 212 does not poll for data, but receives data on any change. As an example, data collector 212 can retrieve data from an LTE network/backbone (i.e., core network) for gathering the core network information related to the performance and/or state of the underlying network. In some embodiments, node hardware element 162 shown in FIG. 1 includes an interface that can be adapted and enhanced to provide such input.

In some embodiments, device data source 204 can be an application within the private network, such as streaming control application 140 described above and shown in FIG. 1. Device data source 204 can receive or retrieve data related to mobile devices in the network that are present for monitoring. Environmental data source 206 can include various local or web-enabled sources, such as a weather web site for retrieving environmental parameters that affect the performance of the underlying network. Other sources for environmental data source 206 can include a static RF propagation map, such as static network data 180 described above.

In some embodiments, data collector 212 can examine the core network information, the device information and the environment data for proper format and examination of expected data patterns. In addition, the consistency of each record can be verified, with inconsistent records discarded by data collector 212. Further, in some embodiments, data collector 212 can check the core network information, the device information and the environment data to avoid duplicate reception, i.e., data from the same source containing the same information coming into the system from different devices/users.

Data parser 214 is responsible for transforming the raw data that has been input from the various sources into streams of structured (i.e., formatted) data. In embodiments, data parser 214 can parse the information into a predictive information data stream, a raw location data stream, other data streams, or combinations thereof. According to embodiments, a Kafka cluster, available from the Apache^{®} Software Foundation, can be implemented as data parser 214, while Map/Reduce frameworks (e.g., Apache Spark) can enable suitable processing time. If the number of monitored mobile devices on LTE network 160 increases, various components can be scaled up to meet computational specifications according to some implementations.

Location calculator 220 receives the raw location data stream from data interface 210 as an input to calculate potential future positions for each registered mobile device (for example, moving network devices 164 and 166). In some embodiments, location calculator 220 calculates the potential future positions for each registered mobile device based at least upon current position of the registered mobile devices within LTE network 160 and location history of the registered mobile devices. The location history for a registered mobile device includes a series of locations previously traversed by the registered mobile device for a configurable time period. In embodiments, the location history can be stored in data repository 240. Given various potential time offsets, an array of possible future positions is calculated by location calculator 220.

Prediction component 230 receives the calculated location data stream from the location calculator 220 and the predictive information data stream from data interface 210 as inputs to predict various network parameters indicating network performance at the provided future locations for each mobile device. In some embodiments, prediction component 230 includes a trained machine learning (ML) algorithm which correlates data from input sources and determines a predicted network performance metric for the future location(s). According to an implementation, simple ML models can be used for the training (e.g., Random Forrest or Gradient Boost, amongst other options). In other embodiments, more sophisticated ML models can be implemented if the simple ML models do not provide enough prediction accuracy or are overly sensitive to different types of data. For example, a convolutional neural network (CNN) Encoder architecture may be used, which takes multiple various signals as input and creates a coverage heat map. This can be coupled with tailored training approaches such as reinforcement learning or unsupervised learning to increase the model's accuracy when operating in field. One of ordinary skill in the relevant art will understand that this can be assessed on a case by case basis depending on the deployment of private network 130 and prediction system 200.

Data can be collected and analyzed for various scenarios and formatted so that the data can be input into the ML algorithm during training. Each data sample can include the device identification (ID), collected core network information, and device information. In addition, external conditions (weather, terrain, coverage map) that make up the environmental data can be included in combination with the GPS location of specified areas.

Each sample can be labeled with the perceived network performance metric for that device at that location at the specific moment in time. The data samples can be separated as is typically done into training data and test data. Using the test data, the prediction accuracy can be validated based on the predicted value of the network performance metric compared to a measured value of the network performance metric.

Considering the technical problem, one goal is an accurate notification for any device of interest that is going to lose connectivity. As a result, prediction can be tuned, for the ML algorithm may be trained, to avoid false negatives to the extent possible and minimize the chances that a device is not properly predicted to have insufficient bandwidth in the desired time window. Conversely, false positives may not present the same disadvantages in many instances.

In certain embodiments, groups and individuals employing the prediction service may monitor many mobile devices. Thus the same messaging and warnings may be available to a number of devices in the network. When one of the moving network devices are predicted to have low bandwidth, the user may simply switch to a different mobile device to avoid the interruptions (e.g., from moving network device 164 to moving network device 166). As described in this embodiment, false predictions have minimal impact to the end-user.

Prediction component 230 can be deployed outside of specific implementations (such as the AIR-LYNX solutions given above). For example, prediction component 230 can serve different network providers, or even be implemented in the cloud for managing multiple clients/customers. If scalability occupies an important consideration for prediction component 230, a microservices approach can be followed. In this approach, every component will eventually be a sub-component, so that one can instantly deploy additional resources as needed.

In order to optimize computational cost, prediction component 230 can be a pretrained ML algorithm providing a prediction based on specific feature affecting bandwidth allocation. If approached in this manner, high computational needs are avoided except in cases of a large number of monitored mobile devices or for long time offsets (i.e., an increased universe of possible locations the mobile device can reach in the allotted time). In those instances where a larger number of calculations result, various modifications can be made to the training process to compensate. For example, simpler algorithms can be implemented, less precise approximations can be made, and so forth.

In some embodiments, data repository 240 stores much or all of the information that provides input across the lifecycle of prediction system 200, i.e., location data, core network information, device information, network configuration data, environmental data and/or predicted network performance metrics. Several pieces of information may persist for longer periods of time than others within data repository 240. For example, the location information for each mobile device in the network may be stored for a longer period of time, based on its use calculating future positions of those mobile devices. Another instance can be the coverage map (i.e., propagation map), depending on the landscape of the environment and the long-term effects of topology on the predictive outputs. Configuration data may also be stored and persist for the entire lifecycle. Examples of the configuration data maintained in data repository 240 can include user terminal models, input source configurations (such as from application streaming server 140 or its equivalent, node hardware element 162, or other interfaces used in private streaming network 130), time offsets, and/or callback universal resource locators (URLs).

Another example of data that may be stored in data repository 240 for an extended period of time may be the predicted network performance metric, that is to the say the output of prediction component 230. In some embodiments, each prediction for the future position of each mobile device is stored in data repository 240. The underlying calculations resulting in the output of prediction component 230 may be requested. In some embodiments, the output of prediction component 230 may be used for retraining the ML algorithm for more accurate predictions (described briefly below).

In some embodiments and merely as an example, data repository 240 may be implemented using an Apache^{®} Cassandra ring. The Cassandra ring implementation lacks a single point of failure, due to its internal ring topology, can be easily and linearly scalable, as well as offers quick write/response times. Alternatively, PostgreSQL or MongoDB in high availability mode are suitable. Other implementations are also possible as will be apparent to one of skill in the relevant arts of storage and database management.

As the volume of data to be stored grows, storing all records within a single database instance may become technically unwieldy, infeasible or impossible. To maintain referential integrity of the data, specialized techniques may be used which are included in the design of predictive system 200. A series of metadata can also be collected to allow for data traceability - data source, collection mechanism, timestamps, and the like. After the initial data starts entering prediction system 200, automated procedures can be instituted to ensure new data conforms to previously collected data, such as the information processed by data interface 210.

Prediction component 230 functionality through API 255 can offer two primary modalities. The first implementation is continuous prediction, offered through a subscribe/notify API, which results in alerting a user of prediction system 200 that a predicted network performance metric is predicted to be above or below a configured threshold. As an example, a user may subscribe for prediction service to receive notifications about moving network devices that are predicted to have available bandwidth below a certain threshold. In embodiments, the user can subscribe for a certain device(s) and/or a certain threshold(s). A default threshold may be used if a threshold is not provided by the user. Similarly, if a specific moving network device is not provided by the user, notifications for all devices monitored by prediction system 200 may be sent when the predicted network performance metrics drop below the specified threshold.

As part of this implementation, the prediction component 230 may continuously monitor data from the network data source 202, device data source 204, environmental data source 206 to determine the predicted network performance metrics for the future location of moving network devices (and notify a user if a future disruption is predicted). The subscription model provides a way to automate prediction system 200 as much as possible, so that a user of prediction system 200 does not need to implement any additional logic to track the devices and monitor bandwidth.

As an example, a user of prediction system 200 can choose five moving network devices that the user wishes to subscribe for alerts during a broadcast. If a certain network parameter, such as bandwidth, falls below a threshold which is a minimum for a high-definition (HD) broadcasting standard, the user wishes to be notified. The user may select a five second time offset in order to provide enough time to switch to one of the other four moving network devices (or select from among the four to which the broadcaster would like to switch). In this example, any time the bandwidth falls below the threshold, prediction system 200 notifies the user and the user can then select one of the other four streaming moving network devices to stream. Thus, if the stream is on a race leader, but the moving network device associated with that race leader is on a path to enter an area in which prediction system 200 predicts the available bandwidth will fall below the threshold, an alert can be sent to the user. The user may then select another moving network device to stream within that five seconds between alert and disruption.

The second implementation is an on-demand mode, offered through an on-demand API. Prediction component 230 will determine the predicted network performance metric (for example, the available bandwidth) for moving network devices and/or for a requested location per individual queries. When using on-demand requests, prediction system 200 will provide real-time or near-real-time information regarding bandwidth availability. Requests can be submitted for predictions about either a specific device that is operating on LTE network 160 or a specific location within LTE network 160. Responses will provide information about the predicted bandwidth (or alternative network parameters as appropriate) at a future time offset per the request.

A specific time offset can be provided from the user so that prediction component 230 can provide the predicted network performance metric for that specific offset. In some embodiments, the potential values of the time offset may be restricted to a specific range of discrete possibilities. As an example, this time offset may be a value from a series of time offsets such as 0, 1, 2, or 3 seconds. This range can be configurable, but within the limits of utility; so, for example, a value of less than 0.5 seconds, can be considered as actual measurement as opposed to a prediction. Similarly, there can be an upper bound for the time offset, given that the probability that the prediction will be sufficiently accurate becomes smaller. The specific values and bounds for the time offsets may be dependent upon specific implementations and can be determined with adequate testing.

In some embodiments, web application server 250 may enable messaging to a user device (e.g., through push notifications on a web application, through an instant messaging feed, or through other messaging formats). In some embodiments, web application server 250 can enable an entire interface available through a dedicated web site or application (details of which are omitted here for the sake of brevity). One of skill in the relevant art would appreciate various methods and system for presenting the predictions discussed above and below with a user via a web site, graphical user interface (GUI) or the like.

Configuration server 260 provides supporting functionality for prediction system 200 by enabling an administrator of the system to configure parameters as appropriate. As examples, the parameters may include core network interfaces, mobile device interfaces, weather input sources, RF propagation map configuration, default or selected time offsets, and/or call back URLs for Subscribe/Notify user implementations. In some embodiments, configuration server 260 includes a separate interface. Alternatively, interface elements for configuration server 260 can be presented along with various other aspects of system 200 in a single GUI, application interface, or web site. Configuration server 260 and the functionality it provides may be available to user device 150. Various forms interfaces and interactions with configuration server 260 will be understood by one of skill in the relevant arts.

From a security aspect, the architecture of the present disclosure does not allow directly exposed interaction with the database or other systems to avoid illicit use of APIs 255 and 257. In an implementation, all application interfaces can be exposed exclusively through Representational State Transfer architecture (i.e., RESTful) calls. The model of the present application also implements a common way to limit exposure of APIs 255 and 257, by implementing authorization and authentication barriers for use of the system. In this way, prediction system 200 can determine the legitimacy of connecting entities, while also instituting policies that govern access rights.

Security is not just limited to user interfaces, as other input sources pose threats. For this reason, according to some implementations, private streaming network 130 will be accessed only by authorized users/administrators upon creation by node hardware element 162, i.e., private network 130 will not be publicly accessible. For certain sets of data that should rarely change, e.g., the terrain and propagation mapping, manual input data methods can be used that are securely authenticated, according to some implementations. But for other sets of information, such as weather data, access to streaming control application 140 can be hidden behind a VPN or otherwise restricted, depending on where prediction system 200 is deployed.

System components can be hardened using external open-source toolsets. For example, containers and original equipment manufacturer (OEM) software (e.g., operating systems) can be secured by tools such as OPENVAS developed by Greenbone Networks GmbH of Osnabrück, Germany. Other open source options can be used, such as OpenSCAP, as can other commercially available toolsets, such as NESSUS (available from Tenable, Inc. of Columbia, Maryland), FORTIFY (from Micro Focus International in Newbury, England), or one of variety of products from Qualys, Inc., of Foster City, California.

Web application server 250 can enable interaction between a user or an administrator and multiple aspects of prediction system 200. In some embodiments, web application server 250 can allow the administrator/user to configure and access prediction component 230 through a RESTful API 257. In certain embodiments, web application server 250 allows a user to query for a specific prediction (via web server RESTful interface 255 shown in FIG. 2 in communication with web application server 250 and exposed to users). In embodiments, web application server 250 can send notifications to the user device for display via RESTful API 255 (e.g., transmitted to and displayed on user device 150 as shown in FIG. 1 and described above). In embodiments, web application server 250 can send notifications via RESTful API 257 to a UI for an administrator for display on a separate UI (not depicted in the present application). RESTful API 257 can also be in communication with other components of prediction system 200, such as RF propogation map 265.

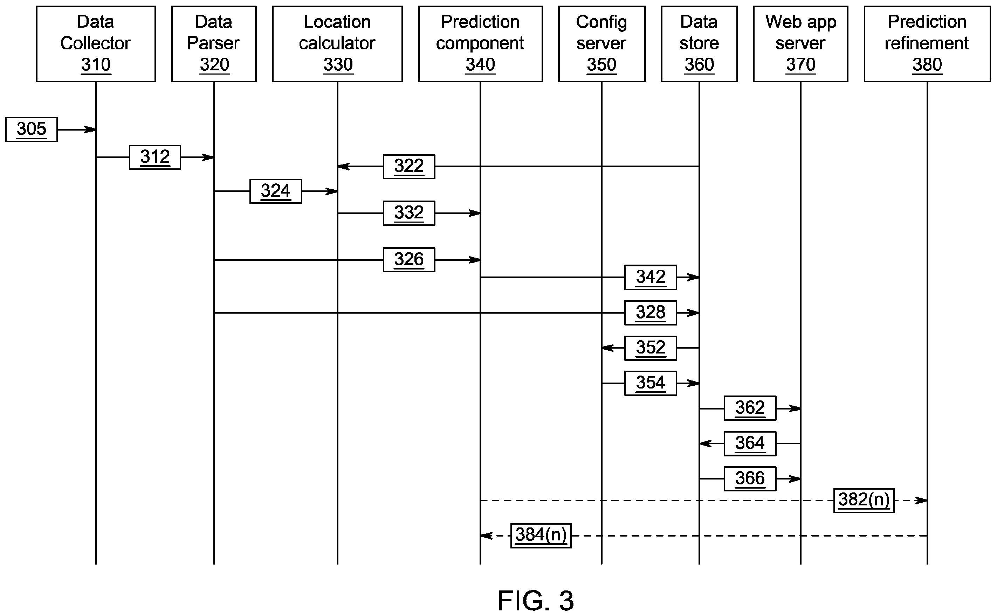

Turning now to FIG. 3, shown is a diagram representing an example data flow 300 through a system for predicting network service for a device moving through the network, according to embodiments of the application. A data collector 310, a data parser 320, a location calculator 330, a prediction component 340, a configuration server 350, a data store 360, a web application server 370, and a prediction refinement component 380 are each shown as components to which and from which various transmissions or data streams are sent/received. Through the description below, the terms transmission, reception, data stream, request or response may be used interchangeably and equally to describe certain aspects of the flow of information and messaging throughout the system. In other words, depending on the direction and perspective, a transmission or a request by one component may be a reception or a response by a component on the opposite end of the given data stream. The components shown in data flow 300 can be the same or substantially similar to those shown in FIG. 2 and described above with respect to prediction system 200.

Data collector 310 receives data in a transmission 305. The data includes core network information, device information in the private network, and environmental data. In response to that reception, data collector 310 transmits the data to data parser 320 in a transmission 312 to parse the data. While shown as a single transmission, data may or may not come synchronously from various sources. Data can be polled or received on a regular or irregular interval from various sources at any point in time. As an example, all received data can be sorted and fed to the prediction service once every second. Data may be stored for historical reasons, but the data that is fed to the prediction service persists as current data. As new data arrives, the "current" data can be overwritten with the most recently received information.

Data store 360 sends transmission 322 to location calculator 330, which includes network data and/or historical data for location calculator 330 to use in calculating locations, such as network maps or configuration data. Data parser 320 transmits a trio of data streams 324, 326, and 328, each to a different recipient or recipients. Data parser 320 sends transmission 324 to location calculator 330, transmission 324 including raw location data as part or all of its data stream. Data parser 320 sends transmission 326 to prediction component 340, with transmission 326 including mobile device data, core network data and/or environmental data. Data parser 320 transmits data stream 328 to data store 360, which can include any part or all of the data included in transmissions 324 and 326 that is to be persisted in storage for a given amount of time.

After using location data sent in transmission 324 as well as any stored data sent in transmission 322 to determine calculated location information, location calculator 330 then transmits data stream 332 to prediction component 340. Data stream 332 includes the calculated location information as at least a portion of the data stream. Prediction component 340, having also received transmission 326, can then use at least portions of both data streams to determine one or more predicted network performance metrics for network 130, which can be in turn used to form a prediction data stream.

Transmission 342, which includes the prediction data stream, is transmitted from prediction component 340 to data store 360. Data store 360 then requests configuration information at a transmission 352, which is returned in a response/transmission 354. With the suitable configuration information of transmission 354 and the prediction data stream of transmission 342, data store 360 can then send data stream 362 to web application server 370 so that the prediction is available to device, user, or administrator (such as through an API). Web application server 370 can request any additional information needed in presenting data, such as the configuration information or settings, the static network information, the core network data, etc., to the device, user or administrator. The response 366 sent from data store 360 to web application server 370 then completes the messaging sequence for a given device, location and time in accordance with embodiments of the present application.

Alternatively, and not shown in FIG. 3, transmission 342 may be sent directly from prediction component 340 to web application server 370. In this way, the prediction data stream can be shared directly with web application server 370 (and likewise with an API to expose those results to a device/user/administrator) prior to being stored by data store 360. In this scenario, the prediction data stream can be sent to data store 360 from web application server 370 as part of response 364. Other arrangements and alternative flows of data can be contemplated within the scope of this disclosure, particularly as it concerns data store 360 and when the sequence generated data streams are transmitted for preservation/persistence of the data. Various arrangements that optimize the speed or efficacy of the prediction, while also allowing for the proper storage of the underlying data will be apparent to one of skill in the relevant arts.

In some embodiments, prediction component 340 can transmit a transmission 382(n) to prediction refinement component 380. Transmission 382(n) is so noted because n can equal any integer value as various iterations allow repeated transmissions between prediction component 340 and prediction refinement component 380. As additional data is received and/or predictions are made, the same can be transmitted throughout the system and specifically to prediction refinement component 380. Using the data streams sent to prediction refinement component 380, the ML algorithms used by prediction component 340 can be refined and updated by transmission 384(n) in order to improve the accuracy of the predictions. In some embodiments, real-time results or near-real-time results can be usd to assess previous prediction accuracy for one or more devices. Thus, transmissions 382(n) and 384(n) are each side of a continuous feedback loop between prediction component 340 and prediction refinement component 380.

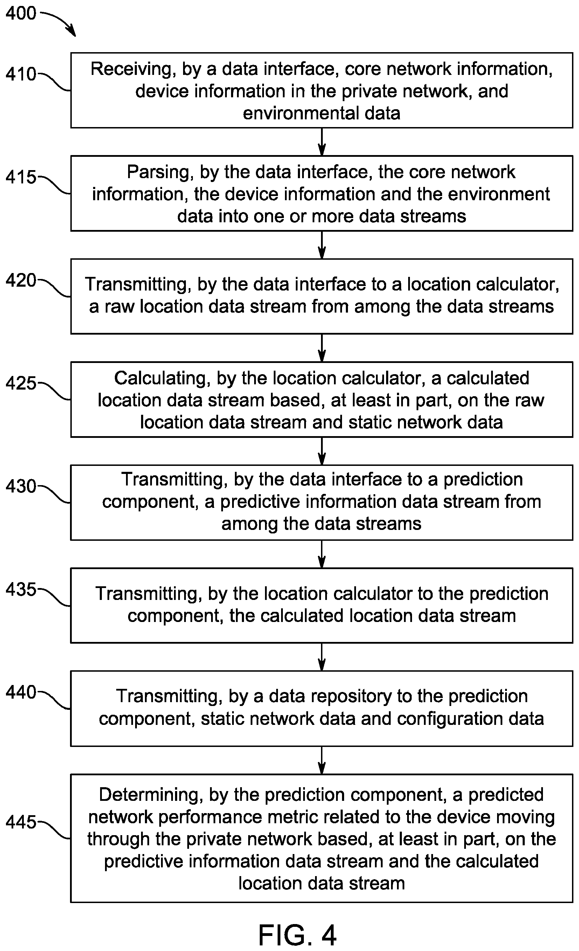

FIG. 4 is a flow chart representing a method 400 of predicting network service of a device moving through the network, according to embodiments of the application. As an example, method 400 can be carried out in an environment the same or substantially similar to environment 100 shown and described with reference to FIG. 1 above. More specifically, in some embodiments, the steps of method 400 can be executed by various components in prediction system 200 to provide one or more network prediction metrics to administrators or users as depicted in FIG. 2 and described above.

At a step 410, a data interface receives core network information, device information in the private network, and environmental data. According to some embodiments, data interface 210, or more specifically data collector 212 receives the core network information and the device information. At a step 415, the data interface parses the core network information, the device information and the environment data into one or more data streams. For example, data parser 214 in FIG. 2 described above can parse the core network information, the device information and the environment data into one or more data streams. In some embodiments, the one or more data streams are formatted by data parser 214 into one or more suitable formats so that the data streams may be used as inputs at least for a location calculator and a prediction component. Receiving environmental data in step 410 may include receiving weather data, whereas receiving device information may also include receiving raw device location data, device signal strength data and/or device speed data in certain embodiments.

At a step 420, the data interface (such as data parser 214 of data interface 210) transmits a raw location data stream to a location calculator. In embodiments, the raw location data stream is a data stream from among the one or more data streams noted above. At a step 425, the location calculator calculates a calculated location data stream based, at least in part, on the raw location data stream and static network data. According to some embodiments, location calculator 220 performs steps 420 and 425. In certain embodiments, calculating the calculated location data stream based on the static network data in step 425 may be based on configuration data transmitted from a configuration server, such as configuration server 260 described above and depicted in FIG. 2.

At a step 430, the data interface transmits to a prediction component a predictive information data stream from among the data streams. According to some embodiments, data interface 210, and more specifically data parser 214, can transmit a predictive information data stream from among the data streams. Prediction component 230 receives the predictive information data stream in some embodiments. The predictive information data stream can include some or all of the data streams parsed by data parser 214. The predictive information data stream can include the information from the raw location data stream as well, received either directly from data parser 214 or from location calculator 220.

At a step 435, the location calculator (e.g., location calculator 220) transmits the calculated location data stream, previously calculated at step 425, to the prediction component (e.g., prediction component 230). Static network data and configuration data is transmitted, by a data repository (e.g., data repository 240) to the prediction component, at a step 440.

At a step 445, the prediction component determines a predicted network performance metric related to the device moving through the private network. The prediction component determines the predicted network performance metric based, at least in part, on the predictive information data stream and the calculated location data stream. The predicted network performance metric can be a parameter, such as an available bandwidth at a given location within the private network. The predicted network performance metric can also be a parameter such as signal strength or signal-to-noise-plus-interference ratio (SINR), amongst other parameters that would be indicative of signal processing capability at the location at some time offset from the present (e.g., plus 1, 2, or 3 seconds from current). In various embodiments, prediction component 230 determines the predicted network performance metric.

According to some embodiments, determining the predicted network performance metric includes estimating network performance for the device at a location in the private network by performing one or more machine learning algorithms on at least portions of the predictive information data stream and the calculated location stream. Performing the one or more machine learning algorithms may include performing an ensemble machine learning method on the received data streams.

In some embodiments, the predicted network performance metric is transmitted, directly or indirectly, by the prediction component to a web application server. In an embodiment, prediction component 230 transmits the predicted network performance metric to web application server 250. In some embodiments, the predicted network performance metric is transmitted by the prediction component to a data repository, such as data repository 240 described above (and shown in FIG. 2). In certain embodiments, the web application server (such as, web application server 250) transmits the predicted network performance metric to a typical user interface component (such as a web site or mobile application) in response to the predicted network performance metric falling below a specified performance threshold. In some embodiments, the web application server transmits the predicted network performance metric to the user interface component in response to a request received from the user interface component.

Optionally, steps 410-440 can be performed iteratively with a prediction data stream including a plurality of predicted network performance metrics transmitted from the prediction component to a prediction refinement component. In some embodiments, the prediction refinement component can be prediction refinement component 380 depicted in FIG. 3 and described above. Prediction refinement component 380 can use online training to refine the one or more ML algorithms in some embodiments.

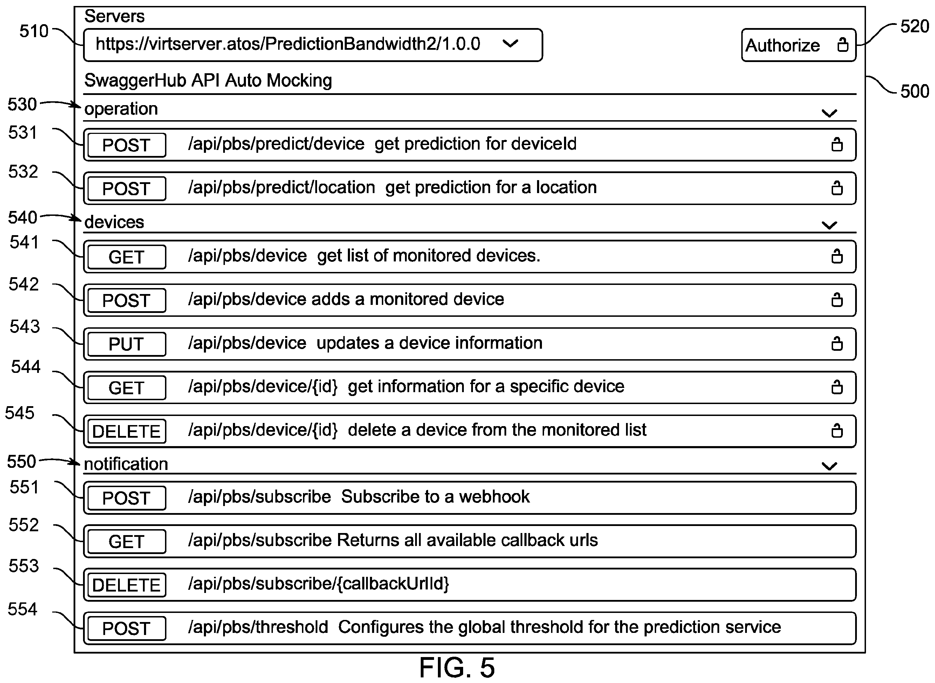

FIG. 5 is a visual representation (VR) 500 that illustrates features and aspects of one or more application programming interfaces (APIs) according to embodiments of the disclosure. VR 500 includes a server indicator 510, an authorization indicator 520, operation header 530, device header 540, and notification header 550, with corresponding buttons below each of headers 530, 540 and 550 for individual calls or commands related to the respective APIs.

Server indicator 510 and authorization indicator 520 display settings or 500. As depicted in FIG. 5, server indicator 510 is a dropdown display that enables an administrative user to see which of one or more servers with which the APIs will be used. While server indicator 510 is shown as a dropdown menu, other display methods are contemplated within the scope of the present application, such as highlighted text among a list of available servers, servers with radio button indicators or checkbox indicators, or any other manner of listing the servers in communication or potentially in communication with VR 500.

Authorization indicator 520 allows an administrative user to see which of the individual buttons has been enabled or can be accessible. This indicator can be used in conjunction with the buttons described below and may use a different icon when a function is authorized or not authorized. In embodiments, authorization indicator 520 can be grayed out or at reduced opacity to indicate that the API is unavailable. Other display mechanisms are contemplated by the present application, such as checkboxes, drag and drop operations, or other components apparent to one of skill in the relevant arts of display design and construction.

Operation header 530 is shown above buttons 531 and 532. This section of VR 500 shows an administrator or user APIs related to getting predictions as described above and below. Button 531 is shown for an API denoted as a 'predict/device' call, which is an API that obtains a prediction for an individual user device in the private network. Button 532 is shown for an API denoted as a 'predict/location' call, which is an API that returns a prediction for particular location found within the private network. While these specific naming conventions and calls have been shown, other possibilities are contemplated within the scope of the present application. For example, in embodiments additional buttons or other interface components could be added that show APIs for calling a group of devices or a group of locations.

Device header 540 is shown above buttons 541 through 545. As illustrated in FIG. 5, buttons 541, 543 and 544 each show APIs that perform an information retrieval or transmission function. For example, button 541 shows an **API** that obtains a list of monitored devices, button 543 displays an API that updates device information, and 544 depicts an API that returns information for a specific device. Buttons 542 and 545 show APIs that perform associative functions, respectively adding and removing a device from a list. Once again, the buttons shown are merely illustrative in nature and other buttons, functions, or naming conventions are contemplated within the scope of the present disclosure.

Notification header 550 is shown above buttons 551 through 554. The notifications managed by the APIs that buttons 551-554 depict relate to how and when notifications are generated. For example, button 551 is for an **API** that permits the administrator to manage a subscription function. Buttons 552 and 553 are shown as calling APIs related to callback URLs. Button 554 is depicted as enabling the configuration of global thresholds for the prediction service. As with those described above, buttons 551-554 are merely examples and other functions, descriptions and labeling falls within the scope of the present application.

Unless otherwise defined, all terms (including technical and scientific terms) used herein have the same meaning as commonly understood by the person skilled in the art to which this present disclosure belongs. Furthermore, terms, such as those defined in commonly used dictionaries, should be interpreted as having a meaning that is consistent with their meaning in the context of the relevant art and will not be interpreted in an idealized or overly formal sense unless expressly defined herein.

While aspects of the present disclosure have been particularly shown and described with reference to the embodiments above, it will be understood by those skilled in the art that various additional embodiments may be contemplated by the modification of the disclosed methods when falling within the scope of the present disclosure as determined based upon the appended claims.

## Claims

1. A method (400) for predicting network service of a private network (160) serving a moving device in the private network (160), comprising:
(410) receiving, by a data interface (210/310), core network information, device information in the private network, and environmental data;
(415) parsing, by the data interface (210/310), the core network information, the device information and the environment data into one or more data streams;
(420) transmitting, by the data interface (210/310) to a location calculator (220/330), a raw location data stream from among the data streams;
(425) calculating, by the location calculator (220/330), a calculated location data stream based, at least in part, on the raw location data stream and static network data;
(430) transmitting, by the data interface (210/310) to a prediction component (230/340), a predictive information data stream from among the data streams;
(435) transmitting, by the location calculator (220/330) to the prediction component (230/340), the calculated location data stream;
(440) transmitting, by a data repository (240) to the prediction component (230/340), static network data and configuration data;
(445) determining, by the prediction component (230/340), a predicted network performance metric related to the device moving through the private network (160) based, at least in part, on the predictive information data stream and the calculated location data stream; and
forming, by the prediction component (230/340), a prediction data stream using the predicted network performance metric;
transmitting, by the prediction component (230/340), the prediction data stream to a data store (240/360);
sending, by the data store (240/360), the prediction data stream to a web application server (250/370) so that the prediction is available to the device, user or administrator,
wherein determining the predicted network performance metric includes estimating network performance for the device at a location in the private network (160) by performing one or more machine learning algorithms on at least portions of the predictive information data stream and the calculated location stream,
wherein performing one or more machine learning algorithms includes performing an ensemble machine learning method based on convolutional neural network , CNN, Encoder architecture,
which takes multiple various signals as input and creates a coverage heat map, and
wherein the static network data includes one or more of terrain data, location topography data, or radio frequency, RF, characteristics of the private network.

2. The method according to any of the preceding claims, wherein the method further comprising:
iteratively performing the steps of receiving (410), parsing (415), transmitting the raw location data stream (420), calculating (425), transmitting the predictive information data stream (430), transmitting the calculated location data stream (435), transmitting the static network data and configuration data (440), and determining the predicted network performance metric (445);
transmitting, from the prediction component (230/340) to a prediction refinement component (380), a prediction data stream including a plurality of predicted network performance metrics; and/or
refining one or more machine learning algorithms of the prediction component through online and offline training of the one or more algorithms.

3. The method according to any of the preceding claims, wherein the method further comprises transmitting, by the prediction component (230/340) to a web application server (250/370), the predicted network performance metric.

4. The method according to any of the preceding claims, wherein a web application server (250/370) transmits the predicted network performance metric to a user interface component (255) in response to the predicted network performance metric falling below a specified performance threshold.

5. The method according to any of the preceding claims, wherein a web application server (250/370) transmits the predicted network performance metric to a user interface component (255) in response to a request received from the user interface component.

6. The method according to any of the preceding claims, wherein determining the predicted network performance metric includes estimating network performance for a time offset.

7. The method according to any of the preceding claims, wherein determining the predicted network performance metric includes using static data (180), wherein the static data includes one or more of terrain data, location topography data, antenna location(s), or antenna transmission power data from a map of radio frequency, RF, characteristics of the private network.

8. The method according to any of the preceding claims, wherein calculating the calculated location data stream based on static network data includes configuration data transmitted from a configuration server (260/350).

9. The method according to any of the preceding claims, wherein receiving environmental data includes receiving weather data.

10. The method according to any of the preceding claims, wherein receiving device information includes receiving raw device location data, device signal strength data and/or device speed data.

11. A system (200) for predicting network performance of a private network (160) serving a device moving through the private network (160), comprising:
a location calculator (220/330) configured to receive, from a data interface (210/310), a raw location data stream among one or more data streams to determine a calculated location information based, at least in part, on static network data and the raw location data stream received, and to transmit a calculated location data stream to a prediction component, wherein the data interface (210/310) is configured to receive core network information, device information in the private network, and environmental data and is further configured to parse the core network information, the device information, and the environmental data into one or more data streams;
a prediction component (230/340) configured to receive:
from the data interface (210/310), at least a predictive information data stream among the one or more data streams and to receive, from the location calculator (220/330), the calculated location data stream, and
from a data repository (240/360), network configuration information and static network data, wherein the static network data includes one or more of terrain data, location topography data, or radio frequency, RF, characteristics of the private network,
wherein the prediction component (230/340) is further configured to determine one or more predicted network performance metrics from the predictive information data stream and the calculated location data stream, including means configured to estimate network performance for the device at a location in the private network by performing one or more machine learning algorithms on at least portions of the predictive information data stream and the calculated location stream, wherein performing one or more machine learning algorithms includes performing an ensemble machine learning method based on convolutional neural network, CNN, Encoder architecture, which takes multiple various signals as input and creates a coverage heat map; to form a prediction data stream using the predicted network performance metrics; and to transmit the prediction data stream to a web application server (250/370) so that the prediction is available to the device, user or administrator; and
a device data source (204) configured to receive or retrieve data related to mobile devices in the private network (160).

12. The system according to claim 11, wherein the web application server (250/370) is configured to receive the one or more network performance metrics and to transmit the one or more network performance metrics to a user interface component (255).

13. The system according to claim 11 or 12, further comprising
a configuration server (260/350) configured to transmit network configuration information; and/or
the data repository (240) configured to receive and store the one or more network performance metrics, the network configuration information, and the static network data.

## Patentansprüche

1. Verfahren (400) zum Vorhersagen des Netzwerkdienstes eines privaten Netzwerks (160), das ein Gerät bedient, das sich durch das private Netzwerk (160) bewegt, umfassend:
(410) Empfangen, durch eine Datenschnittstelle (210/310), von Kernnetzwerkinformationen, Geräteinformationen im privaten Netzwerk und von Umgebungsdaten;
(415) Parsen, durch die Datenschnittstelle (210/310), der Kernnetzinformationen, der Geräteinformationen und der Umgebungsdaten durch die Datenschnittstelle (210/310) in einen oder mehrere Datenströme;
(420) Übertragen, durch die Datenschnittstelle (210/310) an einen Standortberechner (220/330) eines Rohdatenstroms für den Standort aus den Datenströmen;
(425) Berechnen, durch den Standortberechner (220/330), eines berechneten Standortdatenstroms der zumindest teilweise auf dem Rohstandortdatenstrom und statischen Netzwerkdaten basiert;
(430) Übertragen, durch die Datenschnittstelle (210/310) an eine Vorhersagekomponente (230/340), eines prädiktiven Informationsdatenstroms aus den Datenströmen;
(435) Übertragen, durch den Standortberechner (220/330) an die Vorhersagekomponente (230/340), des berechneten Standortdatenstroms;
(440) Übertragen, durch einen Datenspeicher (240) an die Vorhersagekomponente (230/340), von statischen Netzwerkdaten und Konfigurationsdaten;
(445) Bestimmen, durch die Vorhersagekomponente (230/340), einer vorhergesagten Netzwerkleistungsmetrik in Bezug auf das sich durch das private Netzwerk (160) bewegende Gerät zumindest teilweise basierend auf dem Datenstrom mit Vorhersageinformationen und dem berechneten Standortdatenstrom; und
Bilden, durch die Vorhersagekomponente (230/340), eines Vorhersagedatenstroms unter Verwendung der vorhergesagten Netzwerkleistungsmetrik;
Übertragen, durch die Vorhersagekomponente (230/340), des Vorhersagedatenstroms an einen Datenspeicher (240/360);
Senden, durch den Datenspeicher (240/360), des Vorhersagedatenstroms an einen Webanwendungsserver (250/370), so dass die Vorhersage für das Gerät, den Benutzer oder den Administrator verfügbar ist,
wobei das Bestimmen der vorhergesagten Netzwerkleistungsmetrik das Schätzen der Netzwerkleistung für das Gerät an einem Standort im privaten Netzwerk (160) durch Ausführen eines oder mehrerer maschineller Lernalgorithmen auf mindestens Teilen des Vorhersageinformationsdatenstroms und des berechneten Standortstroms einschließt,
wobei die Ausführung eines oder mehrerer maschineller Lernalgorithmen die Ausführung eines Ensemble-Verfahrens für maschinelles Lernen auf der Grundlage einer Convolutional Neural Network, CNN, Encoder-Architektur einschließt, die mehrere verschiedene Signale als Eingabe nimmt und eine Abdeckungs-Heatmap erstellt, und
wobei die statischen Netzwerkdaten eines oder mehrere der folgenden Elemente einschließen: Geländedaten, Standorttopografiedaten oder Radiofrequenz-, RF-, Eigenschaften des privaten Netzwerks.

2. Verfahren nach einem der vorhergehenden Ansprüche, wobei das Verfahren ferner umfasst:
iteratives Ausführen der Schritte des Empfangens (410), Parsens (415), Übertragens des Rohstandortdatenstroms (420), Berechnens (425), Übertragens des Vorhersageinformationsdatenstroms (430), Übertragens des berechneten Standortdatenstroms (435), Übertragens der statischen Netzwerkdaten und Konfigurationsdaten (440) und Bestimmens der vorhergesagten Netzwerkleistungsmetrik (445);
Übertragen, von der Vorhersagekomponente (230/340) an eine Vorhersageverfeinerungskomponente (380), eines Vorhersagedatenstroms, der eine Vielzahl von vorhergesagten Netzwerkleistungsmetriken einschließt; und/oder
Verfeinern eines oder mehrerer maschineller Lernalgorithmen der Vorhersagekomponente durch Online- und Offline-Training des einen oder der mehreren Algorithmen,

3. Verfahren nach einem der vorhergehenden Ansprüche, wobei das Verfahren ferner das Übertragen, durch die Vorhersagekomponente (230/340) an einen Webanwendungsserver (250/370), der vorhergesagten Netzwerkleistungsmetrik umfasst.

4. Verfahren nach einem der vorhergehenden Ansprüche, wobei ein Webanwendungsserver (250/370) in Antwort darauf, dass die vorhergesagte Netzwerkleistungsmetrik unter einen festgelegten Leistungsschwellenwert fällt, die vorhergesagte Netzwerkleistungsmetrik an eine Benutzerschnittstellenkomponente (255) überträgt.

5. Verfahren nach einem der vorhergehenden Ansprüche, wobei ein Webanwendungsserver (250/370) in Antwort auf eine von der Benutzerschnittstellenkomponente empfangene Anforderung die vorhergesagte Netzwerkleistungsmetrik an eine Benutzerschnittstellenkomponente (255) überträgt.

6. Verfahren nach einem der vorhergehenden Ansprüche, wobei das Bestimmen der vorhergesagten Netzwerkleistungsmetrik das Schätzen der Netzwerkleistung für einen Zeitversatz einschließt.

7. Verfahren nach einem der vorhergehenden Ansprüche, wobei das Bestimmen der vorhergesagten Netzwerkleistungsmetrik das Verwenden statischer Daten (180) einschließt, wobei die statischen Daten eines oder mehrere der folgenden Elemente einschließen: Geländedaten, Standorttopografiedaten, Antennenstandort(e) oder Antennenübertragungsleistungsdaten aus einer Karte der Radiofrequenz, RF-, -Eigenschaften des privaten Netzwerks.

8. Verfahren nach einem der vorhergehenden Ansprüche, wobei das Berechnen des berechneten Standortdatenstroms auf der Grundlage statischer Netzwerkdaten Konfigurationsdaten einschließt, die von einem Konfigurationsserver (260/350) übertragen werden.

9. Verfahren nach einem der vorhergehenden Ansprüche, wobei das Empfangen von Umgebungsdaten das Empfangen von Wetterdaten einschließt.

10. Verfahren nach einem der vorhergehenden Ansprüche, wobei das Empfangen von Geräteinformationen das Empfangen von Rohdaten zum Standort des Geräts, Daten zur Signalstärke des Geräts und/oder Daten zur Geschwindigkeit des Geräts einschließt.

11. System (200) zum Vorhersagen der Netzwerkleistung eines privaten Netzwerks (160), das ein Gerät bedient, das sich durch das private Netzwerk (160) bewegt, umfassend:
einen Standortberechner (220/330), der so konfiguriert ist, dass er von einer Datenschnittstelle (210/310) einen Rohstandortdatenstrom aus einem oder mehreren Datenströmen empfängt, um eine berechnete Standortinformation zu bestimmen, die zumindest teilweise auf statischen Netzwerkdaten und dem empfangenen Rohstandortdatenstrom basiert, und um einen berechneten Standortdatenstrom an eine Vorhersagekomponente zu übertragen, wobei
die Datenschnittstelle (210/310) so konfiguriert ist, dass sie Kernnetzinformationen, Geräteinformationen im privaten Netzwerk und Umgebungsdaten empfängt, und ferner so konfiguriert ist, dass sie die Kernnetzinformationen, die Geräteinformationen und die Umgebungsdaten in einen oder mehrere Datenströme zerlegt;
eine Vorhersagekomponente (230/340), die so konfiguriert ist, dass sie
von der Datenschnittstelle (210/310) mindestens einen Vorhersageinformationsdatenstrom aus dem einen oder den mehreren Datenströmen und vom Standortberechner (220/330) den berechneten Standortdatenstrom empfängt, und
von einem Datenspeicher (240/360) Netzwerkkonfigurationsinformationen und statische Netzwerkdaten, wobei die statischen Netzwerkdaten eine oder mehrere der folgenden Informationen einschließen: Geländedaten, Standorttopografiedaten oder Radiofrequenz- ,RF-, Eigenschaften des privaten Netzwerks,
wobei die Vorhersagekomponente (230/340) ferner so konfiguriert ist, dass sie eine oder mehrere vorhergesagte Netzwerkleistungsmetriken aus dem Vorhersageinformationsdatenstrom und dem berechneten Standortdatenstrom bestimmt, einschließlich Mitteln, die so konfiguriert sind, dass sie die Netzwerkleistung für das Gerät an einem Standort im privaten Netzwerk schätzen, indem sie einen oder mehrere maschinelle Lernalgorithmen auf mindestens Teilen des Vorhersageinformationsdatenstroms und des berechneten Standortstroms ausführen, wobei die Ausführung eines oder mehrerer maschineller Lernalgorithmen die Ausführung eines Ensemble-Verfahrens für maschinelles Lernen auf der Grundlage einer Convolutional Neural Network, CNN-, Encoder-Architektur einschließt, das mehrere verschiedene Signale als Eingabe nimmt und eine Abdeckungs-Heatmap erstellt, um einen Vorhersagedatenstrom unter Verwendung der vorhergesagten Netzwerkleistungsmetriken zu bilden; und um den Vorhersagedatenstrom an einen Webanwendungsserver (250/370) zu übertragen, so dass die Vorhersage für das Gerät, den Benutzer oder den Administrator verfügbar ist; und
eine Gerätedatenquelle (204), die so konfiguriert ist, dass sie Daten empfängt oder abruft, die sich auf mobile Geräte im privaten Netzwerk (160) beziehen.

12. System nach Anspruch 11, wobei der Webanwendungsserver (250/370) so konfiguriert ist, dass er die eine oder mehreren Netzwerkleistungsmetriken empfängt und die eine oder mehreren Netzwerkleistungsmetriken an eine Benutzerschnittstellenkomponente (255) überträgt.

13. System nach Anspruch 11 oder 12, das ferner umfasst
einen Konfigurationsserver (260/350), der zum Übertragen von Netzwerkkonfigurationsinformationen konfiguriert ist; und/oder
den Datenspeicher (240), der zum Empfangen und Speichern der einen oder mehreren Netzwerkleistungsmetriken, der Netzwerkkonfigurationsinformationen und der statischen Netzwerkdaten konfiguriert ist.

## Revendications

1. Procédé (400) pour prédire le service réseau d'un réseau privé (160) desservant un dispositif se déplaçant à travers le réseau privé (160), comprenant :
(410) la réception, par une interface de données (210/310), d'informations sur le réseau central, d'informations sur le dispositif dans le réseau privé et de données environnementales ;
(415) l'analyse, par l'interface de données (210/310), des informations sur le réseau central, des informations sur le dispositif et des données environnementales en un ou plusieurs flux de données ;
(420) la transmission, par l'interface de données (210/310) à un calculateur de localisation (220/330), d'un flux de données de localisation brutes parmi les flux de données ;
(425) le calcul, à l'aide du calculateur de localisation (220/330), d'un flux de données de localisation calculées basé, au moins en partie, sur le flux de données de localisation brutes et les données de réseau statiques ;
(430) la transmission, par l'interface de données (210/310) à un composant de prédiction (230/340), d'un flux de données d'informations prédictives parmi les flux de données ;
(435) la transmission, par le calculateur de localisation (220/330) au composant de prédiction (230/340), du flux de données de localisation calculées ;
(440) la transmission, par un référentiel de données (240) au composant de prédiction (230/340), de données réseau statiques et de données de configuration ;
(445) la détermination, par le composant de prédiction (230/340), d'une métrique de performance réseau prédite liée au dispositif se déplaçant à travers le réseau privé (160) sur la base, au moins en partie, du flux de données d'informations prédictives et du flux de données de localisation calculé ; et
la formation, par le composant de prédiction (230/340), d'un flux de données de prédiction à l'aide de la métrique de performance réseau prédite ;
la transmission, par le composant de prédiction (230/340), du flux de données de prédiction à une mémoire de données (240/360) ;
l'envoi, par la mémoire de données (240/360), du flux de données de prédiction à un serveur d'applications web (250/370) afin que la prédiction soit disponible pour le dispositif, l'utilisateur ou l'administrateur,
dans lequel la détermination de la métrique de performance réseau prédite comprend l'estimation de la performance réseau pour le dispositif à un emplacement dans le réseau privé (160) en exécutant un ou plusieurs algorithmes d'apprentissage automatique sur au moins des parties du flux de données d'informations prédictives et du flux d'emplacements calculés,
dans lequel l'exécution d'un ou plusieurs algorithmes d'apprentissage automatique comprend l'exécution d'une méthode d'apprentissage automatique d'ensemble basée sur une architecture d'encodeur à réseau neuronal convolutif, CNN, qui reçoit plusieurs signaux différents comme entrée et crée une carte thermique de couverture, et
dans lequel les données réseau statiques comprennent une ou plusieurs des données suivantes : données topographiques, données topographiques de localisation ou caractéristiques de fréquence radio, RF, du réseau privé.

2. Procédé selon l'une des revendications précédentes, le procédé comprenant également :
l'exécution itérative des étapes consistant à recevoir (410), analyser (415), transmettre le flux de données de localisation brutes (420), calculer (425), transmettre le flux de données d'informations prédictives (430), transmettre le flux de données de localisation calculées (435), transmettre les données de réseau statiques et les données de configuration (440), et déterminer la métrique de performance réseau prédite (445) ;
la transmission, depuis le composant de prédiction (230/340) vers un composant d'affinement de prédiction (380), d'un flux de données de prédiction comprenant une pluralité de mesures de performance réseau prédites ; et/ou
l'affinage d'un ou plusieurs algorithmes d'apprentissage automatique du composant de prédiction par le biais d'un apprentissage en ligne et hors ligne du ou des algorithmes.

3. Procédé selon l'une des revendications précédentes, le procédé comprenant également la transmission, par le composant de prédiction (230/340) à un serveur d'applications web (250/370), de la métrique de performance réseau prédite.

4. Procédé selon l'une des revendications précédentes, dans lequel un serveur d'applications web (250/370) transmet la métrique de performance réseau prédite à un composant d'interface utilisateur (255) en réponse au fait que la métrique de performance réseau prédite tombe en dessous d'un seuil de performance spécifié.

5. Procédé selon l'une des revendications précédentes, dans lequel un serveur d'applications web (250/370) transmet la métrique de performance réseau prédite à un composant d'interface utilisateur (255) en réponse à une demande reçue du composant d'interface utilisateur.

6. Procédé selon l'une des revendications précédentes, dans lequel la détermination de la métrique de performance réseau prédite comprend l'estimation de la performance réseau pour un décalage temporel.

7. Procédé selon l'une des revendications précédentes, dans lequel la détermination de la métrique de performance réseau prédite comprend l'utilisation de données statiques (180), les données statiques comprennant une ou plusieurs données topographiques, données topographiques de localisation, localisation d'antenne(s) ou données de puissance d'émission d'antenne provenant d'une carte des caractéristiques de radiofréquence, RF, du réseau privé.

8. Procédé selon l'une des revendications précédentes, dans lequel le calcul du flux de données de localisation calculé sur la base de données réseau statiques comprend des données de configuration transmises par un serveur de configuration (260/350).

9. Procédé selon l'une des revendications précédentes, dans lequel la réception de données environnementales comprend la réception de données météorologiques.

10. Procédé selon l'une des revendications précédentes, dans lequel la réception d'informations sur le dispositif comprend la réception de données brutes sur la localisation du dispositif, de données sur la puissance du signal du dispositif et/ou de données sur la vitesse du dispositif.

11. Système (200) permettant de prédire les performances réseau d'un réseau privé (160) desservant un dispositif se déplaçant à travers le réseau privé (160), comprenant :
un calculateur de localisation (220/330) configuré pour recevoir, depuis d'une interface de données (210/310), un flux de données de localisation brutes parmi un ou plusieurs flux de données afin de déterminer des informations de localisation calculées basées, au moins en partie, sur des données de réseau statiques et le flux de données de localisation brutes reçu, et pour transmettre un flux de données de localisation calculées à un composant de prédiction, dans lequel
l'interface de données (210/310) est configurée pour recevoir des informations de réseau central, des informations de dispositif dans le réseau privé et des données environnementales, et est également configurée pour analyser les informations de réseau central, les informations de dispositif et les données environnementales en un ou plusieurs flux de données ;
un composant de prédiction (230/340) configuré pour recevoir :
depuis l'interface de données (210/310), au moins un flux de données d'informations prédictives parmi le ou les flux de données et pour recevoir, à partir du calculateur de localisation (220/330), le flux de données de localisation calculé, et
depuis un référentiel de données (240/360), des informations de configuration réseau et des données réseau statiques, les données réseau statiques comprenant une ou plusieurs données topographiques, données topographiques de localisation ou caractéristiques de radiofréquence, RF, du réseau privé,
dans lequel le composant de prédiction (230/340) est également configuré pour déterminer une ou plusieurs mesures de performance réseau prédites à partir du flux de données d'informations prédictives et du flux de données de localisation calculées, comprenant des moyens configurés pour estimer la performance réseau pour le dispositif à un emplacement dans le réseau privé en exécutant un ou plusieurs algorithmes d'apprentissage automatique sur au moins des parties du flux de données d'informations prédictives et du flux de localisation calculées, l'exécution d'un ou plusieurs algorithmes d'apprentissage automatique comprenant l'exécution d'une méthode d'apprentissage automatique d'ensemble basée sur une architecture d'encodeur à réseau neuronal convolutif, CNN, qui prend plusieurs signaux différents comme entrée et crée une carte thermique de couverture pour former un flux de données de prédiction à l'aide des mesures de performances réseau prédites ; et pour transmettre le flux de données de prédiction à un serveur d'applications web (250/370) afin que la prédiction soit disponible pour le dispositif, l'utilisateur ou l'administrateur ; et
une source de données de dispositif (204) configurée pour recevoir ou récupérer des données liées à des dispositifs mobiles dans le réseau privé (160),

12. Système selon la revendication 11, dans lequel le serveur d'applications web (250/370) est configuré pour recevoir une ou plusieurs mesures de performance du réseau et transmettre une ou plusieurs mesures de performance du réseau à un composant d'interface utilisateur (255).

13. Système selon la revendication 11 ou 12, comprenant également
un serveur de configuration (260/350) configuré pour transmettre des informations de configuration réseau ; et/ou
le référentiel de données (240) configuré pour recevoir et stocker la ou les mesures de performances réseau, les informations de configuration réseau et les données réseau statiques.
